# EUROPEAN PATENT APPLICATION

(11) **EP 3 783 058 A1**
(43) Date of publication of application: **24.02.2021**
(21) Application number: 19193050.2
(22) Date of filing: 22.08.2019
(51) Int. Cl.: C08K 3/04

(54) **COMPOSITIONS WITH IMPROVED DIELECTRIC STRENGTH**

(71) Applicant: SABIC Global Technologies B.V., 4612 PX Bergen op Zoom (NL)
(72) Inventor: MERCX, Frans, 4612 PX Bergen op Zoom (NL); DA ROSA, Fabien, 4612 PX Bergen op Zoom (NL); LUGGER, Jody, 4612 PX Bergen op Zoom (NL)
(74) Representative: Elzaburu S.L.P.

(57) **Abstract**

The disclosure concerns polymer compositions including a graphene and optional filler. The polymer compositions exhibited improved dielectric strength.

## Description

### TECHNICAL FIELD

The disclosure relates to polymer compositions having dielectric properties.

### BACKGROUND

Modifying the properties of a polymer composition through the introduction of various fillers is a common practice. Fillers can be used to impart certain physical properties to a given polymer composition. Depending upon the profile of the base polymer matrix, these fillers can improve, for example, flexural, impact or tensile strength, thermal conductivity, electrical conductivity, flame resistance. Fillers may also enhance or maintain performances under harsh conditions such as elevated temperature, moisture or irradiating environments. Filled polymer compositions are desirable for their versatility and widely applicable field of use, including electrically insulating materials. Such electric insulation is key in many high voltage applications. Often, however, dielectric properties, particularly, the dielectric strength of an insulating material, may limit the design. Improved dielectric properties of materials thus may provide improved products and designs.

Generally, polymers are useful in electrical insulation because of their isolative nature. It is known that the addition of conductive fillers, including all carbon-based fillers like carbon black, carbon fiber, and graphite, tends to lower the dielectric strength of the resulting composition. However, the addition of conventional high-aspect ratio insulative fillers may increase the dielectric strength of the polymer compositions further but may adversely affect important mechanical properties. There remains a need in the art for filled polymer compositions that exhibit improved dielectric strength while maintaining mechanical performance and are also useful as electrically insulating materials. These and other shortcomings are addressed by the present disclosure.

### SUMMARY

Aspects of the present disclosure relate to a polymer composition comprising from about 5 wt. % to about 99 wt. % of a polymer base resin and from about 0.01 wt. % to about 10 wt. % of a graphene. The polymer composition may exhibit a dielectric strength that is at least 1.1 times greater than a substantially similar composition in the absence of the graphene. The combined weight percent value of all components does not exceed about 100 wt. %, and all weight percent values are based on the total weight of the composition. The polymer composition can further include additional fillers.

Other aspects of the present disclosure relate to compositions comprising from about 5 wt. % to about 99 wt. % of a polymer base resin, from about 0.01 wt. % to about 40 wt. % of a filler, and from about 0.1 wt. % to about 5 wt. % of a graphene. The polymer composition may exhibit a dielectric constant that is at least 1.1 times greater than a substantially similar composition in the absence of the graphene. The combined weight percent value of all components does not exceed about 100 wt. %, and all weight percent values are based on the total weight of the composition. The polymer composition can further include additional fillers.

In yet other aspects, the present disclosure relates to a method of forming a composition including a polymer base resin, a graphene, and optionally one or more fillers.

In certain aspects, the disclosure relates to a method of forming an article including the steps of molding an article from the polymer composition described herein. In some examples, the article may comprise an electrically insulating material.

### BRIEF DESCRIPTION OF DRAWINGS

FIGS. 1A-1C show the values of Table 5.
FIG. 2 provides a graphical representation of the dielectric strength with respect to the graphene.

### DETAILED DESCRIPTION

Filled polymer compositions can have a number of improved properties based upon the type of filler added. Electrically insulative fillers may be introduced to a polymer resin matrix to impart certain thermal properties. For example, the introduction of high aspect ratio electrically insulative fillers (for example, fiber-like rather than spherical fillers) may increase the dielectric strength of the composition. However, the addition of large amounts of fillers to increase the dielectric strength may negatively affect mechanical properties of the polymer composition. More specifically, while fillers generally improve the dielectric strength, improvement depends upon the filler type, filler size, and filler loading level. Improvement may also depend on the adhesion between or compatibility of the filler and matrix. Literature teaches for instance that a mica (a sheet silicate, or phyllosilicate) filler in a polyamide-6, or mica in an epoxy, or boron nitride in an epoxy, or boron nitride in PLA resin provides an increase in the dielectric strength. S. Bose, H. Raghu, P. A. Mahanwar, Mica Reinforced Nylon-6: Effect of Coupling Agents on Mechanical, Thermal, and Dielectric Properties, Journal of Applied Polymer Science, Vol. 100, 4074-4081 (2006); P. Bajaj, N.K. Jha, A. Kumar, Effect of Coupling Agents on Thermal and Electrical Properties of Mica/Epoxy Composites, Journal of Applied Polymer Science, Vol. 56, 1339-1347 (1995); M. Donnay, S. Tzavalas, E. Logakis, Boron nitride filled epoxy with improved thermal conductivity and dielectric breakdown strength, Composites Science and Technology 110 (2015) 152-158; and L. Bai, S. Zheng, R. Bao, Z. Liu, M. Yang, W. Yang, Effect of PLA Crystallization on the Thermal Conductivity and Breakdown Strength of PLA/BN Composites, ES Mater. Manuf., 2018, 3.

For most micron sized fillers (0.3-1000 µm), initially the dielectric strength of the base polymer is negatively affected by the addition of fillers and only at higher loadings a positive effect is observed. Li et al. As a further example, aluminum oxide nano-sized (0.3-1000 nm) fillers exhibited a more pronounced effect on dielectric strength compared to micron-sized Al₂O₃ fillers. However, as the amount of filler increased, the dielectric strength decreased. Recently composites of polyamideimide-alumina exhibited poorer dielectric strength as the amount of alumina nano-filler was increased. Here, the dielectric strength was reduced to below that of the polymer base resin. See, C. Calebrese, J.K. Nelson, L. S. Schadler, D.l Schweickart, Polyamideimide-alumina nanocomposites for high temperatures, 2010 International Conference on Solid Dielectrics, Potsdam, Germany, July 4-9, 2010.

Because conductive carbon fillers generally decrease dielectric strength, ceramic insulative fillers are often included to increase dielectric properties. See, L.S. Nasrat, B.A. Iskander, M.N. Kamel, Carbon Nanotubes Effect for Polymer Materials on Break Down Voltage, International Journal of Electrical and Computer Engineering (IJECE), Vol. 7, No. 3, August 2017, pp. 1770-1778.

With respect to graphene, an electrically conductive material, it has previously been found that baked nanographene combined with polyethylene high voltage cables may exhibit increased dielectric strength. However, the baking treatment of the graphenes was required to impart this effect. Another recent study has shown that the addition of 0.43 vol% of graphene to a polydimethylsiloxane polymer had a detrimental effect on the dielectric strength. The present disclosure surprisingly demonstrates significant improvements in dielectric strength upon the addition of low levels of graphenes (less than 5 wt. % or less than 3 wt. %). The present disclosure combines certain graphene materials with polymer base resin to provide improved dielectric strength while maintaining desirable mechanical properties. The disclosed compositions are thus useful for electrically insulating applications.

Disclosed herein are polymer compositions having low levels of graphenes. In an aspect, the composition from about 5 wt. % to about 99 wt. % of a polymer base resin; optionally from about 0.01 wt. % to about 40 wt. % of a filler; and from about 0.1 wt. % to about 5 wt. % , or from about 0.1 wt. % to 10 wt. %, of a graphene wherein the polymer composition exhibits a dielectric strength that is at least 1.1 times greater than a substantially similar composition in the absence of the graphene. The combined weight percent value of all components does not exceed about 100 wt. %, and all weight percent values are based on the total weight of the composition.

### Polymer Base Resin

In an aspect, the polymer composition can include a polymer base resin. In various aspects, the polymer base resin can include a thermoplastic resin or a thermoset resin. Appropriate thermosetting resins can include phenol resin, urea resin, melamine-formaldehyde resin, urea-formaldehyde latex, xylene resin, diallyl phthalate resin, epoxy resin, aniline resin, furan resin, polyurethane, or combinations thereof.

In an aspect, the polymer composition can comprise a polymer base resin. In various aspects, the polymer base resin can comprise a thermoplastic resin or a thermoset resin. The thermoplastic resin can comprise polypropylene, polyethylene, ethylene based copolymer, polyamide, polycarbonate, polyester, polyoxymethylene (POM), polybutylene terephthalate (PBT), polyethylene terephthalate (PET), polycyclohexylendimethylene terephthalate (PCT), liquid crystal polymers (LPC), polyphenylene sulfide (PPS), polyphenylene ether (PPE), polyphenylene oxide-polystyrene blends, polystyrene, high impact modified polystyrene, acrylonitrile-butadiene-styrene (ABS) terpolymer, acrylic polymer, polyetherimide (PEI), polyurethane, polyetheretherketone (PEEK), polylactic acid (PLA) based polymers, poly ether sulphone (PES), and combinations thereof. The thermoplastic resin can also include thermoplastic elastomers such as polyamide and polyester based elastomers. The base substrate can also comprise blends and/or other types of combination of resins described above. In various aspects, the polymer base resin can also comprise a thermosetting polymer. Appropriate thermosetting resins can include phenol resin, urea resin, melamine-formaldehyde resin, urea-formaldehyde latex, xylene resin, diallyl phthalate resin, epoxy resin, aniline resin, furan resin, polyurethane, or combinations thereof.

The polymer base resin of the present disclosure may include a polyamide resin, or a combination of polyamide resins. Polyamide resins useful in the practice of the present invention include a generic family of resins referred to as nylons, which may be characterized by the presence of an amide group (-C(O)NH-). Polyamides, including also polyphthalamides (PPA), suitable for use in the present method include but are not limited to polyamide-6, polyamide-6,6, polyamide-4,6, polyamide 9T, polyamide 10T, polyamide-11, polyamide-12, polyamide-6,10, polyamide-6,12, polyamide 6/6,6, polyamide-6/6,12, polyamide MXD6, polyamide-6T, polyamide-6I, polyamide-6/6T, polyamide-6/61, polyamide-6, 6/6T, polyamide-6,6/6I, polyamide- 6/6/1761, polyamide-6,6/6T/6I, polyamide-6/12/6T, polyamide-6,6/12/6T, polyamide-6/12/6I, polyamide-6,6/12/6I, and combinations thereof. Nylon-6 and nylon-6,6 represent common polyamides and are available from a variety of commercial sources. Polyamides, however, such as nylon-4,6, nylon-12, nylon-6,10, nylon 6,9, nylon 6/6T and nylon 6,6/6T having triamine contents below about 0.5 wt. %, as well as others, such as amorphous nylons may also be useful. In an example, the polymer composition comprises polyamide-6.

Polyamides can be obtained by a number of well-known processes such as those described in U.S. Patent Nos. 2,071,250; 2,071,251; 2,130,523; 2,130,948; 2,241,322; 2,312,966; and 2,512,606. Nylon-6, for example, is a polymerization product of caprolactam. Nylon-6,6 is a condensation product of adipic acid and 1,6-diaminohexane. Likewise, nylon 4,6 is a condensation product between adipic acid and 1,4-diaminobutane. Besides adipic acid, other useful diacids for the preparation of nylons include azelaic acid, sebacic acid, dodecane diacid, as well as terephthalic and isophthalic acids, and the like. Other useful diamines include m-xylyene diamine, di-(4-aminophenyl)methane, di-(4-aminocyclohexyl)methane; 2,2-di-(4-aminophenyl)propane, 2,2-di-(4-aminocyclohexyl)propane, among others. Copolymers of caprolactam with diacids and diamines are also useful. Mixtures of various polyamides, as well as various polyamide copolymers, are also useful. In certain aspects, the compositions disclosed herein may comprise from about 20 wt. % and about 80 wt. % of a polyamide polymer, such as polyamide-6,6 (or nylon-6,6).

In some aspects, polyamides having viscosity of up to about 400 ml/g can be used, or polyamides having a viscosity of about 90 to about 350 ml/g, or polyamides having a viscosity of about 110 to about 240 ml/g, as measured in a 0.5 wt% solution in 96 wt% sulfuric acid in accordance with ISO 307.

Polycarbonates, and combinations comprising thereof, may also be used as the polymer base resin. As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates. The terms "residues" and "structural units", used in reference to the constituents of the polymers, are synonymous throughout the specification.

In certain aspects the polycarbonate polymer is a Bisphenol-A polycarbonate, a high molecular weight (Mw) high flow/ductile (HFD) polycarbonate, a low Mw HFD polycarbonate, or a combination thereof.

The terms "BisA," "BPA," or "bisphenol A," which can be used interchangeably, as used herein refers to a compound having a structure represented by formula (1): 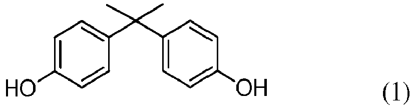 BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

In addition to the polycarbonates described above, combinations of the polycarbonate with other thermoplastic polymers, for example combinations of homopolycarbonates, copolycarbonates, and polycarbonate copolymers with polyesters, can be used. Useful polyesters include, for example, poly(alkylene dicarboxylates), liquid crystalline polyesters, and polyester copolymers. The polyesters described herein can generally be completely miscible with the polycarbonates when blended.

Useful polyesters can include aromatic polyesters, poly(alkylene esters) including poly(alkylene arylates), and poly(cycloalkylene diesters). In an embodiment, useful aromatic polyesters can include poly(isophthalate-terephthalate-resorcinol) esters, poly(isophthalate-terephthalate-bisphenol A) esters, poly[(isophthalate-terephthalate-resorcinol) ester-*co*-(isophthalate-terephthalate-bisphenol A)] ester, or a combination comprising at least one of these. Also contemplated are aromatic polyesters with a minor amount, e.g., 0.5 to 10 wt. %, based on the total weight of the polyester, of units derived from an aliphatic diacid and/or an aliphatic polyol to make copolyesters. Examples of poly(alkylene terephthalates) include poly(ethylene terephthalate) (PET), poly(1,4-butylene terephthalate) (PBT), and poly(n-propylene terephthalate) (PPT). Also useful are poly(alkylene naphthoates), such as poly(ethylene naphthanoate) (PEN), and poly(butylene naphthanoate) (PBN). A specifically useful poly(cycloalkylene diester) is poly(1,4-cyclohexanedimethylene terephthalate) (PCT). Combinations comprising at least one of the foregoing polyesters can also be used.

Copolymers comprising alkylene terephthalate repeating ester units with other ester groups can also be useful. Particularly useful ester units can include different alkylene terephthalate units, which can be present in the polymer chain as individual units, or as blocks of poly(alkylene terephthalates). Copolymers of this type include poly(cyclohexanedimethylene terephthalate)-co-poly(ethylene terephthalate), abbreviated as PETG where the polymer comprises greater than or equal to 50 mol% of poly(ethylene terephthalate), and abbreviated as PCTG where the polymer comprises greater than 50 mol% of poly(1,4-cyclohexanedimethylene terephthalate).

Poly(cycloalkylene diester)s can also include poly(alkylene cyclohexanedicarboxylate)s. Of these, a specific example is poly(1,4-cyclohexanedimethanol-1,4-cyclohexanedicarboxylate) (PCCD).

The polymer base resin may further comprise a polysiloxane-polycarbonate copolymer, also referred to as a poly(siloxane-carbonate). The polydiorganosiloxane (also referred to herein as "polysiloxane") blocks comprise repeating diorganosiloxane units as in formula (2) 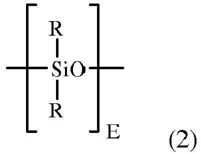 wherein each R is independently a C₁₋₁₃ monovalent organic group. For example, R can be a C₁-C₁₃ alkyl, C₁-C₁₃ alkoxy, C₂-C₁₃ alkenyl, C₂-C₁₃ alkenyloxy, C₃-C₆ cycloalkyl, C₃-C₆ cycloalkoxy, C₆-C₁₄ aryl, C₆-C₁₀ aryloxy, C₇-C₁₃ arylalkyl, C₇-C₁₃ aralkoxy, C₇-C₁₃ alkylaryl, or C₇-C₁₃ alkylaryloxy. The foregoing groups can be fully or partially halogenated with fluorine, chlorine, bromine, or iodine, or a combination thereof. In an embodiment, where a transparent polysiloxane-polycarbonate is desired, R is unsubstituted by halogen. Combinations of the foregoing R groups can be used in the same copolymer.

A combination of a first and a second (or more) polycarbonate-polysiloxane copolymers can be used, wherein the average value of E of the first copolymer is less than the average value of E of the second copolymer.

In an aspect, the polydiorganosiloxane blocks are of formula (3) 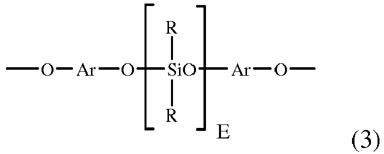 wherein E is as defined above; each R can be the same or different, and is as defined above; and Ar can be the same or different, and is a substituted or unsubstituted C₆-C₃₀ arylene, wherein the bonds are directly connected to an aromatic moiety. Ar groups in formula (3) can be derived from a C₆-C₃₀ dihydroxyarylene compound, for example a dihydroxyarylene compound. Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane. Combinations comprising at least one of the foregoing dihydroxy compounds can also be used.

In another aspect, polydiorganosiloxane blocks can be of formula (4) 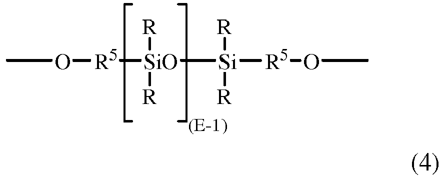 wherein R and E are as described above, and each R⁵ is independently a divalent C₁-C₃₀ organic group, and wherein the polymerized polysiloxane unit is the reaction residue of its corresponding dihydroxy compound. In one aspect, the polydiorganosiloxane blocks are of formula (5): 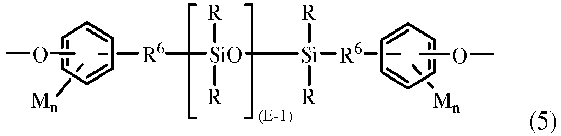 wherein R and E are as defined above. R⁶ in formula (5) is a divalent C₂-C₈ aliphatic. Each M in formula (5) can be the same or different, and can be a halogen, cyano, nitro, C₁-C₈ alkylthio, C₁-C₈ alkyl, C₁-C₈ alkoxy, C₂-C₈ alkenyl, C₂-C₈ alkenyloxy, C₃-C₈ cycloalkyl, C₃-C₈ cycloalkoxy, C₆-C₁₀ aryl, C₆-C₁₀ aryloxy, C₇-C₁₂ aralkyl, C₇-C₁₂ aralkoxy, C₇-C₁₂ alkylaryl, or C₇-C₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, R is methyl, M is methoxy, n is one, R⁶ is a divalent C₁-C₃ aliphatic group. Specific polydiorganosiloxane blocks are of the formula 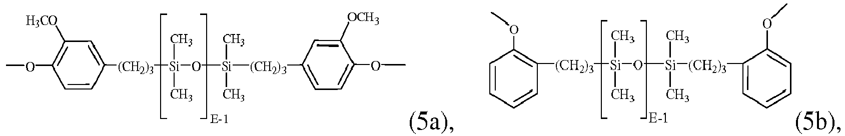 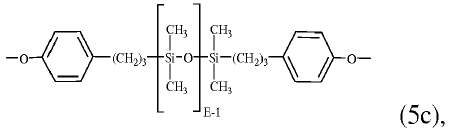 or a combination comprising at least one of the foregoing, wherein E has an average value of 2 to 200, 2 to 125, 5 to 125, 5 to 100, 5 to 50, 20 to 80, or 5 to 20.

Blocks of formula (5) can be derived from the corresponding dihydroxy polydiorganosiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The polysiloxane-polycarbonate copolymers can then be manufactured, for example, by the synthetic procedure of European Patent Application Publication No. 0 524 731 A1 of Hoover, page 5, Preparation 2.

Transparent polysiloxane-polycarbonate copolymers can comprise carbonate units (1) derived from bisphenol A, and repeating siloxane units (6a), (6b), (6c), or a combination comprising at least one of the foregoing (specifically of formula 5a), wherein E has an average value of 4 to 50, 4 to 15, specifically 5 to 15, more specifically 6 to 15, and still more specifically 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(siloxane-carbonate) copolymers.

The polysiloxane-polycarbonate copolymers can comprise 50 wt. % to 99 wt. % of carbonate units and 1 wt. % to 50 wt. % siloxane units. Within this range, the polyorganosiloxane-polycarbonate copolymer can comprise 70 wt. %, to 98 wt. %, more specifically 75 wt. % to 97 wt. % of carbonate units and 2 wt. % to 30 wt. %, more specifically 3 wt. % to 25 wt. % siloxane units.

In some aspects, a blend can be used, in particular a blend of a bisphenol A homopolycarbonate and a polysiloxane-polycarbonate block copolymer of bisphenol A blocks and eugenol capped polydimethylsilioxane blocks, of the formula (6) 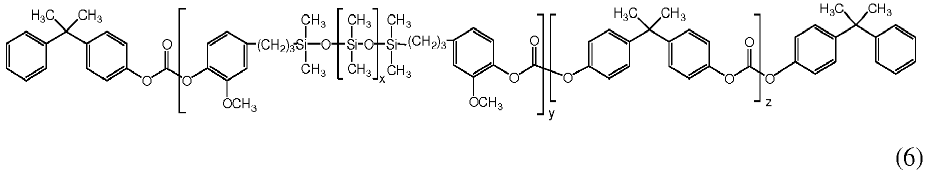 wherein x is 1 to 200, specifically 5 to 85, specifically 10 to 70, specifically 15 to 65, and more specifically 40 to 60; x is 1 to 500, or 10 to 200, and z is 1 to 1000, or 10 to 800. In an embodiment, x is 1 to 200, y is 1 to 90 and z is 1 to 600, and in another embodiment, x is 30 to 50, y is 10 to 30 and z is 45 to 600. The polysiloxane blocks may be randomly distributed or controlled distributed among the polycarbonate blocks.

In one aspect, the polysiloxane-polycarbonate copolymer can comprise 10 wt% or less, specifically 6 wt% or less, and more specifically 4 wt% or less, of the polysiloxane based on the total weight of the polysiloxane-polycarbonate copolymer, and can generally be optically transparent and are commercially available under the designation EXL-T from SABIC. In another aspect, the polysiloxane-polycarbonate copolymer can comprise 10 wt% or more, specifically 12 wt% or more, and more specifically 14 wt% or more, of the polysiloxane copolymer based on the total weight of the polysiloxane-polycarbonate copolymer, are generally optically opaque and are commercially available under the trade designation EXL-P from SABIC.

Polyorganosiloxane-polycarbonates can have a weight average molecular weight of 2,000 Daltons to 100,000 Daltons, specifically 5,000 to 50,000 Daltons as measured by gel permeation chromatography using a crosslinked styrene-divinyl benzene column, at a sample concentration of 1 milligram per milliliter, and as calibrated with polycarbonate standards.

The polyorganosiloxane-polycarbonates can have a melt volume flow rate, measured at 300 °C/1.2 kg, of 1 to 50 cubic centimeters per 10 minutes (cm³/10 min), specifically 2 to 30 cm³/10 min. Mixtures of polyorganosiloxane-polycarbonates of different flow properties can be used to achieve the overall desired flow property.

Non-limiting examples of polysiloxane-polycarbonate copolymers can comprise various copolymers available from SABIC. In an aspect, the polysiloxane-polycarbonate copolymer can contain 6 % by weight polysiloxane content based upon the total weight of the polysiloxane-polycarbonate copolymer. In various aspects, the 6 % by weight polysiloxane block copolymer can have a weight average molecular weight (Mw) of from about 23,000 to 24,000 Daltons using gel permeation chromatography with a bisphenol A polycarbonate absolute molecular weight standard. In certain aspects, the 6% weight siloxane polysiloxane-polycarbonate copolymer can have a melt volume flow rate (MVR) of about 10 cm³/ 10 min at 300°C /1.2 kg (see C9030T, a 6 % by weight polysiloxane content copolymer available from SABIC Innovative Plastics as "transparent" EXL C9030T resin polymer). In another example, the polysiloxane-polycarbonate block can comprise 20 % by weight polysiloxane based upon the total weight of the polysiloxane block copolymer. For example, an appropriate polysiloxane-polycarbonate copolymer can be a bisphenol A polysiloxane-polycarbonate copolymer endcapped with para-cumyl phenol (PCP) and having a 20 % polysiloxane content (see C9030P, commercially available from SABIC Innovative Plastics as the "opaque" EXL C9030P). In various aspects, the weight average molecular weight of the 20 % polysiloxane block copolymer can be about 29,900 Daltons to about 31,000 Daltons when tested according to a polycarbonate standard using gel permeation chromatography (GPC) on a cross-linked styrene-divinylbenzene column and calibrated to polycarbonate references using a UV-VIS detector set at 264 nm on 1 mg/ml samples eluted at a flow rate of about 1.0 ml/minute. Moreover, the 20% polysiloxane block copolymer can have a melt volume rate (MVR) at 300 °C/1.2 kg of 7 cm³/ 10 min and can exhibit siloxane domains sized in a range of from about 5 micron to about 20 micrometers (microns, µm).

As provided herein, the polymer base resin may include polyesters resins. Polyester resins can include crystalline polyester resins such as polyester resins derived from at least one diol, and at least one dicarboxylic acid. Particular polyesters have repeating units according to structural formula (7) 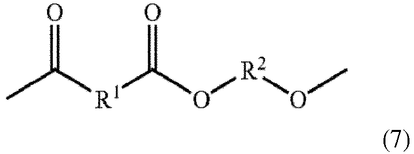 wherein, R¹ and R² are independently at each occurrence a aliphatic, aromatic and cycloaliphatic radical. In one embodiment R2 is an alkyl radical compromising a dehydroxylated residue derived from an aliphatic or cycloaliphatic diol, or mixtures thereof, containing from 2 to about 20 carbon atoms and R¹ is an aromatic radical comprising a decarboxylated residue derived from an aromatic dicarboxylic acid. The polyester is a condensation product where R² is the residue of an aromatic, aliphatic or cycloaliphatic diol having C1 to C30 carbon atoms or chemical equivalent thereof, and R¹ is the decarboxylated residue derived from an aromatic, aliphatic or cycloaliphatic moiety containing diacid of C1 to C30 carbon atoms or chemical equivalent thereof. The polyester resins are typically obtained through the condensation or ester interchange polymerization of the diol or diol equivalent component with the diacid or diacid chemical equivalent component.

Aromatic dicarboxylic acids, for example, terephthalic acid, isophthalic acid, naphthalene dicarboxylic acid and the like, can be used as these bifunctional carboxylic acids, and mixtures of these can be used as needed. Among these, terephthalic acid may be particularly suitable from the standpoint of cost. Also, to the extent that the effects of this invention are not lost, other bifunctional carboxylic acids such as aliphatic dicarboxylic acids such as oxalic acid, malonic acid, adipic acid, suberic acid, azelaic acid, sebacic acid, decane dicarboxylic acid, and cyclohexane dicarboxylic acid; and their ester-modified derivatives can also be used.

In an aspect, commonly used diols can be used herein without difficulty, for example, straight chain aliphatic and cycloaliphatic diols having 2 to 15 carbon atoms, for further example, ethylene glycol, propylene glycol, 1,4-butanediol, trimethylene glycol, tetramethylene glycol, neopentyl glycol, diethylene glycol, cyclohexane dimethanol, heptane-1,7-diol, octane-1,8-diol, neopentyl glycol, decane-1,10-diol, etc.; polyethylene glycol; bivalent phenols such as dihydroxydiarylalkanes such as 2,2-bis(4-hydroxylphenyl)propane that can be called bisphenol-A, bis(4-hydroxyphenyl) methane, , and 2,2-bis(4-hydroxyphenyl)-1,1,1,3,3,3-hexafluoropropane, for example; dihyroxydiarylcycloalkanes such as 1,1-bis(4-hydroxyphenyl)cyclohexane, 1,1-bis(3,5-dichloro-4-hydroxyphenyl)cyclohexane, and 1,1 -bis(4-hydroxyphenyl)cyclodecane; dihydroxydiarylsulfones such as bis(4-hydroxyphenyl)sulfone, and bis(3,5-dimethyl-4-hydroxyphenyl)sulfone, bis(3-chloro-4-hydroxyphenyl)sulfone; dihydroxydiarylethers such as bis(4-hydroxyphenyl)ether, and bis(3-5-dimethyl-4-hydroxyphenyl)ether; dihydroxydiaryl ketones such as 4,4'-dihydroxybenzophenone, and 3,3',5,5'-tetramethyl-4,4-diydroxybenzophenone; dihydroxydiaryl sulfides such as bis(4-hydroxyphenyl)sulfide, bis(3-methyl-4-hydroxyphenyl)sulfide, and bis(3,5-dimethyl-4-hydroxyphenyl)sulfide; dihydroxydiaryl sulfoxides such as bis(4-hydroxyphenyl)sulfoxide; dihydroxydiphenyls such as 4,4'-dihydroxyphenyl; dihydroxyarylfluorenes such as 9,9-bis(4-hydroxyphenyl)fluorene; dihydroxybenzenes such as hydroxyquinone, resorcinol, and methylhydroxyquinone; and dihydroxynaphthalenes such as 1,5-dihydroxynaphthalene and 2,6-dihydroxynaphthalene. Also, two or more kinds of diols can be combined as needed.

In a specific aspect, the polyester can be polyethylene terephthalate, polybutylene terephthalate, polyethylene naphthalate, polybutylene naphthalate, polytrimethylene terephthalate, poly(1,4-cyclohexylenedimethylene 1,4-cyclohexanedicarboxylate), poly(1,4-cyclohexylenedimethylene terephthalate), poly(cyclohexylenedimethylene-co-ethylene terephthalate), or a combination comprising at least one of the foregoing polyesters. Polyethylene terephthalate (PET) and polybutylene terephthalate (PBT) are particularly suitable as polyesters that are obtained by the polymerization of these kinds of bifunctional carboxylic acid and diol ingredients.

Polymer base resin compositions of the present disclosure can be a single kind of polyester used alone, or two or more kinds used in combination. Furthermore, copolyesters can also be used as needed.

In an aspect, polyetherimides can be used in the disclosed compositions and can be of formula (8): 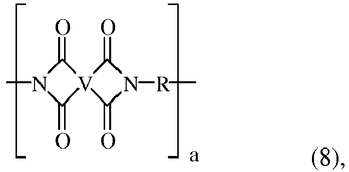 wherein a is more than 1, for example 10 to 1,000 or more, or more specifically 10 to 500.

The group V in formula (8) is a tetravalent linker containing an ether group (a "polyetherimide" as used herein) or a combination of an ether groups and arylenesulfone groups (a "polyetherimidesulfone"). Such linkers include but are not limited to: (a) substituted or unsubstituted, saturated, unsaturated or aromatic monocyclic and polycyclic groups having 5 to 50 carbon atoms, optionally substituted with ether groups, arylenesulfone groups, or a combination of ether groups and arylenesulfone groups; and (b) substituted or unsubstituted, linear or branched, saturated or unsaturated alkyl groups having 1 to 30 carbon atoms and optionally substituted with ether groups or a combination of ether groups, arylenesulfone groups, and arylenesulfone groups; or combinations comprising at least one of the foregoing. Suitable additional substitutions include, but are not limited to, ethers, amides, esters, and combinations comprising at least one of the foregoing.

The R group in formula (8) can include but is not limited to substituted or unsubstituted divalent organic groups such as: (a) aromatic hydrocarbon groups having 6 to 20 carbon atoms and halogenated derivatives thereof; (b) straight or branched chain alkylene groups having 2 to 20 carbon atoms; (c) cycloalkylene groups having 3 to 20 carbon atoms, or (d) divalent groups of formula (9): 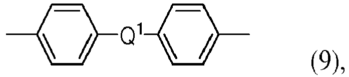 wherein Q1 includes but is not limited to a divalent moiety such as -O-, -S-, -C(O)-, -SO₂-, -SO-, -C_{y}H_{2y}- (y being an integer from 1 to 5), and halogenated derivatives thereof, including perfluoroalkylene groups.

In an aspect, linkers V can include but are not limited to tetravalent aromatic groups of formula (10): 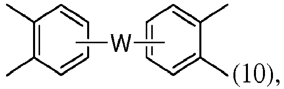 wherein W is a divalent moiety including -O-, -SO₂-, or a group of the formula -O-Z-O-wherein the divalent bonds of the -O- or the -O-Z-O- group are in the 3,3', 3,4', 4,3', or the 4,4' positions, and wherein Z includes, but is not limited, to divalent groups of formulas (11): 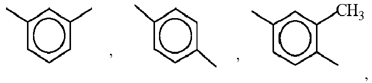 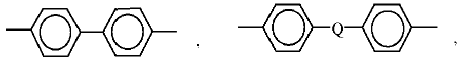 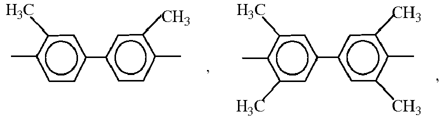 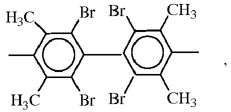 and 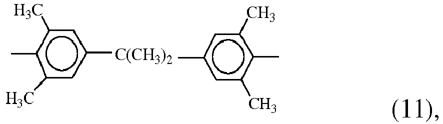 wherein Q can include, but is not limited to a divalent moiety including -O-, -S-, -C(O), -SO₂-, -SO-, -C_{y}H_{2y}- (y being an integer from 1 to 5), and halogenated derivatives thereof, including perfluoroalkylene groups.

In an aspect, the polyetherimide comprise more than 1, specifically 10 to 1,000, or more specifically, 10 to 500 structural units, of formula (12): 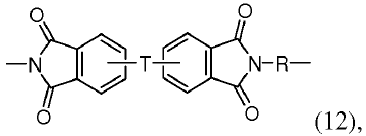 wherein T is -O- or a group of the formula -O-Z-O- wherein the divalent bonds of the -O- or the -O-Z-O- group are in the 3,3', 3,4', 4,3', or the 4,4' positions; Z is a divalent group of formula (8) as defined above; and R is a divalent group of formula (8) as defined above.

In another aspect, the polyetherimidesulfones can be polyetherimides comprising ether groups and sulfone groups.

Even more specifically, polyetherimidesulfones can comprise more than 1, specifically 10 to 1,000, or more specifically, 10 to 500 structural units of formula (13): 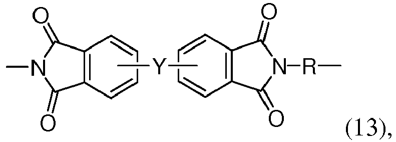 wherein Y is -O-, -SO₂-, or a group of the formula -O-Z-O- wherein the divalent bonds of the -O-, SO₂-, or the -O-Z-O- group are in the 3,3', 3,4', 4,3', or the 4,4' positions, wherein Z is a divalent group of formula (8) as defined above and R is a divalent group of formula (6) as defined above, provided that greater than 50 mole% of the sum of moles Y + moles R in formula (6) contain -SO₂- groups.

It is to be understood that the polyetherimides and polyetherimidesulfones can optionally comprise linkers V that do not contain ether or ether and sulfone groups, for example linkers of formula (14): 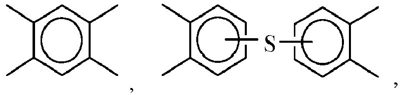 and

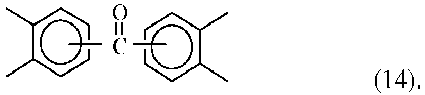

Imide units containing such linkers can generally be present in amounts ranging from 0 to 10 mole % of the total number of units, specifically 0 to 5 mole %. In one embodiment no additional linkers V are present in the polyetherimides and polyetherimidesulfones.

The polyetherimide resin can be selected from the group consisting of a polyetherimide, for example, as described in U.S. Pat. Nos. 3,875,116, 6,919,422, and 6,355,723; a silicone polyetherimide, for example, as described in U.S. Pat. Nos. 4,690,997 and 4,808,686; a polyetherimidesulfone resin, as described in U.S. Pat. No. 7,041,773; or combinations thereof. Each of these patents are incorporated herein in their entirety.

In one aspect, the polymer base resin can comprise a polyamide polymer. In a further aspect, the polyamide polymer component can comprise a single polyamide or, alternatively, in another aspect can comprise a blend of two or more different polyamides. In one aspect, the polyamide polymer component can be nylon 6.

As noted herein, the polymer base resin can comprise a number of thermoplastic resins, or a combination thereof. In one example, the polymer base resin can comprise a polycarbonate copolymer comprising units derived from BPA, or a mixture of one or more polycarbonate copolymers comprising units derived from BPA. In a specific example, the polymer base resin can comprise a polycarbonate copolymer having units derived from BPA and a poly(aliphatic ester)-polycarbonate copolymer derived from sebacic acid.

In further examples, a polycarbonate of the polymer base resin can comprise a branched polycarbonate. An exemplary branching agent can include, but is not limited to 1,1,1-tris(4-hydroxyphenyl)ethane (THPE). As a further example, the branched polycarbonate resin may be endcapped with an appropriate end-capping agent, such as for example, p-cyanolphenol (known as HBN).

Certain aspects of the composition include from about 5 wt. % to about 99 wt. % of a polymer base resin, or from about 40 wt. % to about 99 wt. % of a polymer base resin, or from about 55 wt. % to about 99 wt. % of a polymer base resin, or from about 60 wt. % to about 99 wt. % of a polymer base resin, or from about 70 wt. % to about 99 wt. % of a polymer base resin, or from about 70 wt. % to about 99 wt. % of a polymer base resin, or from about 40 wt. % to about 95 wt. % of a polymer base resin, or from about 55 wt. % to about 95 wt. % of a polymer base resin, or from about 60 wt. % to about 95 wt. % of a polymer base resin, or from about 75 wt. % to about 95 wt. % of a polymer base resin.

### Graphene

In various aspects, the polymer composition comprises graphene. It was found that low levels of graphene may increase the dielectric strength of polymer base resins, such as polyamide 6, when measured according to ISO 60243-1.

The term graphene as used in literature is not unambiguous. In principle graphene is a single layer of carbon atoms with each atom bound to three carbon atoms in a honeycomb structure (see ISO 80004-13 standard). But the term graphene has also been used to describe stacks of multiple graphene layer sheets. In the context of the present disclosure, "graphene" next to the single layer of carbon atoms (ISO 80004-13) may further encompass graphene nanoplatelets, defined by ISO80004-13 as having a typical thickness of 1 to 3 nanometer as well as thicker stacks of graphene layers with a thickness of 3 to 100 nanometer. The number of graphene layers may be determined by any suitable method known in the art. For example, the number of graphene layers may be determined using Raman spectroscopy and transmission electron microscopy (TEM).

Graphene as used herein may include an amount of oxygen. The oxygen content of the graphenes may be up to 40 wt. %, up to 30 wt. %, up to 20 wt. %, up to 10 wt. %, or up to 5 wt. % based on the total weight of the graphene.

In some aspects, the polymer composition may comprise graphene having at least one dimension of a particular size. For example, the graphene layer may have at least one dimension that is less than 100 nm. The graphene layer may have a thickness that is less than 100 nm.

In some aspects, the graphene may have a particular diameter. The polymer composition of claim 1, wherein the graphene has a diameter of less than 30 microns. In further examples, the graphene has a diameter of less than 10 microns.

The disclosed graphene may have a particular surface area. The graphene may have a surface area of greater than 100 m²/g. In further aspects, the graphene may have a surface area of from 100 m²/g to 500 m²/g.

The polymer composition may comprise graphene having a certain oxygen content. In various examples, the graphene may have an oxygen content of less than or equal to 15 % based on the total mass of the graphene. In further examples, the oxygen content of the graphene may be less than or equal to 10 %, or 8 %, based on the total mass of the graphene.

In some aspects, the composition can comprise from about 0.01 wt. % to about 10 wt. % of a graphene based on the total weight of the polymer composition. In further aspects the composition may include from about 0.01 wt. % to about 5 wt. %, or from about 0.01 wt. % to about 3 wt. %, or from about 0.1 wt. % to about 3 wt. %, or from about 0.01 wt. % to about 2.5 wt. %, or from about 0.5 wt. % to about 3 wt. % of a graphene, or from about 1 wt. % to about 3 wt. % of a graphene or from about 0.5 wt. % to about 2.5 wt. % of graphene.

### Additives

The disclosed thermoplastic composition can comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. Exemplary additives can include ultraviolet agents, ultraviolet stabilizers, heat stabilizers, antistatic agents, anti-microbial agents, anti-drip agents, radiation stabilizers, pigments, dyes, fibers, fillers, plasticizers, fibers, flame retardants, antioxidants, lubricants, wood, glass, and metals, and combinations thereof.

According to certain aspects, the polymer compositions may maintain mechanical performance and dielectric strength even with high levels of fillers (for example, greater than 30 wt. % filler based on the total weight of the polymer composition).

The thermoplastic composition disclosed herein can comprise one or more additional fillers. The filler can be selected to impart additional impact strength and/or provide additional characteristics that can be based on the final selected characteristics of the polymer composition. In some aspects, the filler(s) can comprise inorganic materials which can include clay, titanium oxide, asbestos fibers, silicates and silica powders, boron powders, calcium carbonates, talc, kaolin, sulfides, barium compounds, metals and metal oxides, wollastonite, glass spheres, glass fibers, flaked fillers, fibrous fillers, natural fillers and reinforcements, and reinforcing organic fibrous fillers.

Appropriate fillers or reinforcing agents can include, for example, mica, clay, feldspar, quartz, quartzite, perlite, tripoli, diatomaceous earth, aluminum silicate (mullite), synthetic calcium silicate, fused silica, fumed silica, sand, boron-nitride powder, boron-silicate powder, calcium sulfate, calcium carbonates (such as chalk, limestone, marble, and synthetic precipitated calcium carbonates) talc (including fibrous, modular, needle shaped, and lamellar talc), wollastonite, hollow or solid glass spheres, silicate spheres, cenospheres, aluminosilicate or (armospheres), kaolin, whiskers of silicon carbide, alumina, boron carbide, iron, nickel, or copper, continuous and chopped carbon fibers or glass fibers, molybdenum sulfide, zinc sulfide, barium titanate, barium ferrite, barium sulfate, heavy spar, TiO₂, aluminum oxide, magnesium oxide, particulate or fibrous aluminum, bronze, zinc, copper, or nickel, glass flakes, flaked silicon carbide, flaked aluminum diboride, flaked aluminum, steel flakes, natural fillers such as wood flour, fibrous cellulose, cotton, sisal, jute, starch , lignin, ground nut shells, or rice grain husks, reinforcing organic fibrous fillers such as poly(ether ketone), polyimide, polybenzoxazole, poly(phenylene sulfide), polyesters, polyethylene, aromatic polyamides, aromatic polyimides, polyetherimides, polytetrafluoroethylene, and poly(vinyl alcohol), as well combinations comprising at least one of the foregoing fillers or reinforcing agents. The fillers and reinforcing agents can be coated or surface treated, with silanes for example, to improve adhesion and dispersion with the polymer matrix. Fillers generally can be used in amounts of 1 to 200 parts by weight, based on 100 parts by weight of based on 100 parts by weight of the total composition.

In some aspects, the thermoplastic composition may comprise a synergist. In various examples fillers may serve as flame retardant synergists. The synergist facilitates an improvement in the flame retardant properties when added to the flame retardant composition over a comparative composition that contains all of the same ingredients in the same quantities except for the synergist. Examples of mineral fillers that may serve as synergists are mica, talc, calcium carbonate, dolomite, wollastonite, barium sulfate, silica, kaolin, feldspar, barytes, or the like, or a combination comprising at least one of the foregoing mineral fillers. Metal synergists, e.g., antimony oxide, can also be used with the flame retardant. In one example, the synergist may comprise magnesium hydroxide and phosphoric acid. The mineral filler may have an average particle size of about 0.1 to about 20 micrometers, specifically about 0.5 to about 10 micrometers, and more specifically about 1 to about 3 micrometers.

The thermoplastic composition can comprise an antioxidant. The antioxidants can include either a primary or a secondary antioxidant. For example, antioxidants can include organophosphites such as tris(nonyl phenyl)phosphite, tris(2,4-di-t-butylphenyl)phosphite, bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations including at least one of the foregoing antioxidants. Antioxidants can generally be used in amounts of from 0.01 to 0.5 parts by weight, based on 100 parts by weight of the total composition, excluding any filler.

In various aspects, the thermoplastic composition can comprise a mold release agent. Exemplary mold releasing agents can include for example, metal stearate, stearyl stearate, pentaerythritol tetrastearate, beeswax, montan wax, paraffin wax, or the like, or combinations including at least one of the foregoing mold release agents. Mold releasing agents are generally used in amounts of from about 0.1 to about 1.0 parts by weight, based on 100 parts by weight of the total composition, excluding any filler.

In an aspect, the thermoplastic composition can comprise a heat stabilizer. As an example, heat stabilizers can include, for example, organo phosphites such as triphenyl phosphite, tris-(2,6-dimethylphenyl)phosphite, tris-(mixed mono-and dinonylphenyl)phosphite or the like; phosphonates such as dimethylbenzene phosphonate or the like, phosphates such as trimethyl phosphate, or the like, or combinations including at least one of the foregoing heat stabilizers. Heat stabilizers can generally be used in amounts of from 0.01 to 0.5 parts by weight based on 100 parts by weight of the total composition, excluding any filler.

In further aspects, light stabilizers can be present in the thermoplastic composition. Exemplary light stabilizers can include, for example, benzotriazoles such as 2-(2-hydroxy-5-methylphenyl)benzotriazole, 2-(2-hydroxy-5-tert-octylphenyl)-benzotriazole and 2-hydroxy-4-n-octoxy benzophenone or the like or combinations including at least one of the foregoing light stabilizers. Light stabilizers can generally be used in amounts of from about 0.1 to about 1.0 parts by weight, based on 100 parts by weight of the total composition, excluding any filler.

The thermoplastic composition can also comprise plasticizers. For example, plasticizers can include phthalic acid esters such as dioctyl-4,5-epoxy-hexahydrophthalate, tris-(octoxycarbonylethyl) isocyanurate, tristearin, epoxidized soybean oil or the like, or combinations including at least one of the foregoing plasticizers. Plasticizers are generally used in amounts of from about 0.5 to about 3.0 parts by weight, based on 100 parts by weight of the total composition, excluding any filler.

Ultraviolet (UV) absorbers can also be present in the disclosed thermoplastic composition. Exemplary ultraviolet absorbers can include for example, hydroxybenzophenones; hydroxybenzotriazoles; hydroxybenzotriazines; cyanoacrylates; oxanilides; benzoxazinones; 2- (2H-benzotriazol-2-yl)-4-(1,1,3,3-tetramethylbutyl)-phenol (CYASORB™ 5411); 2-hydroxy-4-n-octyloxybenzophenone (CYASORB™ 531); 2-[4,6-bis(2,4-dimethylphenyl)-1,3,5-triazin-2-yl]- 5-(octyloxy)-phenol (CYASORB™ 1164); 2,2'-(1,4- phenylene)bis(4H-3,1-benzoxazin-4-one) (CYASORB™ UV- 3638); 1,3-bis[(2-cyano-3,3-diphenylacryloyl)oxy]-2,2-bis[[(2-cyano-3, 3-diphenylacryloyl)oxy]methyl]propane (UVINUL™ 3030); 2,2'-(1,4-phenylene) bis(4H-3,1-benzoxazin-4-one); 1,3-bis[(2-cyano-3,3-diphenylacryloyl)oxy] -2,2-bis[[(2-cyano-3,3-diphenylacryloyl)oxy]methyl]propane; nano-size inorganic materials such as titanium oxide, cerium oxide, and zinc oxide, all with particle size less than 100 nanometers; or the like, or combinations including at least one of the foregoing UV absorbers. UV absorbers are generally used in amounts of from 0.01 to 3.0 parts by weight, based on 100 parts by weight of the total composition, excluding any filler.

The thermoplastic composition can further comprise a lubricant. As an example, lubricants can include for example, fatty acid esters such as alkyl stearyl esters, e.g., methyl stearate or the like; mixtures of methyl stearate and hydrophilic and hydrophobic surfactants including polyethylene glycol polymers, polypropylene glycol polymers, and copolymers thereof e.g., methyl stearate and polyethylene-polypropylene glycol copolymers in a suitable solvent; or combinations including at least one of the foregoing lubricants. Lubricants can generally be used in amounts of from about 0.1 to about 5 parts by weight, based on 100 parts by weight of the total composition, excluding any filler.

Anti-drip agents can also be used in the composition, for example a fibril forming or non-fibril forming fluoropolymer such as polytetrafluoroethylene (PTFE). The anti-drip agent can be encapsulated by a rigid copolymer, for example styrene-acrylonitrile copolymer (SAN). PTFE encapsulated in SAN is known as TSAN. In one example, TSAN can comprise 50 wt. % PTFE and 50 wt. % SAN, based on the total weight of the encapsulated fluoropolymer. The SAN can comprise, for example, 75 wt. % styrene and 25 wt. % acrylonitrile based on the total weight of the copolymer. An antidrip agent, such as TSAN, can be used in amounts of 0.1 to 10 parts by weight, based on 100 parts by weight of the total composition, excluding any filler.

As an example, the disclosed composition can comprise an impact modifier. The impact modifier can be a chemically reactive impact modifier. By definition, a chemically reactive impact modifier can have at least one reactive group such that when the impact modifier is added to a polymer composition, the impact properties of the composition (expressed in the values of the IZOD impact) are improved. In some examples, the chemically reactive impact modifier can be an ethylene copolymer with reactive functional groups selected from, but not limited to, anhydride, carboxyl, hydroxyl, and epoxy.

In further aspects of the present disclosure, the composition can comprise a rubbery impact modifier. The rubber impact modifier can be a polymeric material which, at room temperature, is capable of recovering substantially in shape and size after removal of a force. However, the rubbery impact modifier should typically have a glass transition temperature of less than 0° C. In certain aspects, the glass transition temperature (Tg) can be less than -5° C, -10° C, -15° C, with a Tg of less than -30° C typically providing better performance. Representative rubbery impact modifiers can include, for example, functionalized polyolefin ethylene-acrylate terpolymers, such as ethylene-acrylic esters-maleic anhydride (MAH) or glycidyl methacrylate (GMA). The functionalized rubbery polymer can optionally contain repeat units in its backbone which are derived from an anhydride group containing monomer, such as maleic anhydride. In another scenario, the functionalized rubbery polymer can contain anhydride moieties which are grafted onto the polymer in a post polymerization step.

In many aspects, the compositions can be prepared according to a variety of methods. The compositions of the present disclosure can be blended, compounded, or otherwise combined with the aforementioned ingredients by a variety of methods involving intimate admixing of the materials with any additional additives desired in the formulation. Because of the availability of melt blending equipment in commercial polymer processing facilities, melt processing methods can be used. In various further aspects, the equipment used in such melt processing methods can include, but is not limited to, co-rotating and counter-rotating extruders, single screw extruders, co-kneaders, disc-pack processors and various other types of extrusion equipment. In a further aspect, the extruder is a twinscrew extruder. In various further aspects, the composition can be processed in an extruder at temperatures from about 180 °C to about 350 °C, particularly 250 °C to 300 °C.

### Properties and Articles

In certain aspects, the compositions can exhibit improved dielectric strength. As used herein, dielectric strength may refer to the electrical strength of an insulating material that is, it describes the voltage that an insulating material has the capacity to withstand before breakdown of the material. The dielectric strength may depend on both the thickness of a givein material and upon the method and conditions of the test employed to measure the property. The dielectric strength may be determined according to ASTM or ISO standard procedures, for example. For example, in some aspects the polymer compositions may exhibit a dielectric strength of at least 20 kV/mm², or at least 30 kV/mm², or at least 40 kV/mm² when tested in accordance with ISO 60243-1. The polymer composition may exhibit a dielectric strength of at least 20 kV/mm to about 535 kV/mm² when tested in accordance with ISO 60243-1. In other aspects, the polymer composition exhibits a dielectric strength of at least 20 kV/mm to about 70 kV/mm² when tested in accordance with ISO 60243-1. Highly charring or highly aromatic resins may exhibit less improvement in dielectric strength when compared to the more aliphatic or less charring resins.

As described herein, while the disclosed polymer compositions exhibit improved dielectric strength, certain mechanical perform properties are maintained. For example, tensile modulus and impact strength of the disclosed compositions may be comparable to substantially similar compositions in the absence of graphene. The disclosed compositions may exhibit a tensile modulus of at least 3000 MPa when tested in accordance with ISO 527. In further examples, the disclosed compositions may exhibit an unnotched Izod impact strength of at least 70 kJ/m² when tested in accordance with ISO 180.

In various aspects, the present disclosure relates to articles comprising the compositions herein. The compositions can be molded into useful shaped articles by a variety of means such as injection molding, extrusion, rotational molding, blow molding and thermoforming to form articles. The compositions can be useful in the manufacture of articles requiring materials with good flow good impact strength, and good dielectric strength. In various aspects, the compositions may be useful for as well as electrically insulating purposes.

The advantageous characteristics of the compositions disclosed herein can make them appropriate for an array of uses. Formed articles can include, but are not limited to, an electrical closure, a lamp housing, or a dielectric film for a capacitor.

### ASPECTS

Aspect 1A. A polymer composition comprising: from about 5 wt. % to about 99 wt. % of a polymer base resin; from about 0 wt. % to about 40 wt. % of a filler; and from about 0.1 wt. % to about 10 wt. % of a graphene; wherein the polymer composition exhibits a dielectric constant that is at least 1.1 times greater than a substantially similar composition in the absence of the graphene, wherein the combined weight percent value of all components does not exceed about 100 wt. %, and all weight percent values are based on the total weight of the composition.
Aspect 1B. A polymer composition comprising: from about 5 wt. % to about 99 wt. % of a polymer base resin; from about 0 wt. % to about 40 wt. % of a filler; and from about 0.1 wt. % to about 5 wt. % of a graphene; wherein the polymer composition exhibits a dielectric constant that is at least 1.1 times greater than a substantially similar composition in the absence of the graphene, wherein the combined weight percent value of all components does not exceed about 100 wt. %, and all weight percent values are based on the total weight of the composition.
Aspect 1C. A polymer composition comprising: from about 5 wt. % to about 99 wt. % of a polymer base resin; from about 0 wt. % to about 40 wt. % of a filler; and from about 0.01 wt. % to about 5 wt. % of a graphene; wherein the polymer composition exhibits a dielectric constant that is at least 1.1 times greater than a substantially similar composition in the absence of the graphene, wherein the combined weight percent value of all components does not exceed about 100 wt. %, and all weight percent values are based on the total weight of the composition.
Aspect 1C. A polymer composition comprising: from about 5 wt. % to about 99 wt. % of a polymer base resin; from about 0 wt. % to about 40 wt. % of a filler; and from about 0.01 wt. % to about 10 wt. % of a graphene; wherein the polymer composition exhibits a dielectric constant that is at least 1.1 times greater than a substantially similar composition in the absence of the graphene, wherein the combined weight percent value of all components does not exceed about 100 wt. %, and all weight percent values are based on the total weight of the composition.
Aspect 2. The polymer composition of aspect 1, wherein the graphene is present in an amount from 0.01 wt. % to about 3 wt. %
Aspect 3. The polymer composition of aspect 1, wherein the graphene is present in an amount from about 0.5 wt. % to about 3 wt. %.
Aspect 4. The polymer composition of aspect 1, wherein the graphene is present in an amount from 1 wt. % to about 3 wt. %.
Aspect 5. The polymer composition of aspect 1, wherein the filler is present in an amount of from 0.01 wt. % to 40 wt. %.
Aspect 6 The polymer composition of aspect 1, wherein the graphene comprises graphene nanoplatelets.
Aspect 7. The polymer composition of aspect 1, wherein the graphene has at least one dimension less than 100 nm.
Aspect 8. The polymer composition of aspect 1, wherein the graphene has an average diameter of less than 30 microns.
Aspect 9. The polymer composition of aspect 1, wherein the graphene has an average diameter of less than 10 microns.
Aspect 10. The polymer composition of aspect 1, wherein the graphene comprises less than 10 layers.
Aspect 10. The polymer composition of aspect 1, wherein the graphene comprises more than 10 layers.
Aspect 10. The polymer composition of aspect 1, wherein the graphene comprises less than 15 layers.
Aspect 11. The polymer composition of aspect 1, wherein the graphene has a surface area of greater than 100 m2/g.
Aspect 12. The polymer composition of aspect 1, wherein the graphene has a surface area of from 100 m2/g to 500 m2/g.
Aspect 13. The polymer composition of aspect 1, wherein the graphene has an oxygen content of less than or equal to 10 % based on the total mass of the graphene.
Aspect 14. The polymer composition of aspect 1, wherein the graphene has an oxygen content of less than or equal to 8 % based on the total mass of the graphene.
Aspect 15. The polymer composition of aspect 1, wherein the polymer base resin comprises a polyamide.
Aspect 16. The polymer composition of aspect 1, wherein the polymer base resin comprises polyamide 6.
Aspect 17. The polymer compositions of any one of aspects 1-13, wherein the polymer composition exhibits a dielectric strength of at least 20 kV/mm when tested in accordance with ISO 60243-1.
Aspect 18. The polymer compositions of any one of aspects 1-13, wherein the polymer composition exhibits a dielectric strength of at least 20 kV/mm to about 535 kV/mm2 when tested in accordance with ISO 60243-1.
Aspect 19. The polymer compositions of any one of aspects 1-13, wherein the polymer composition exhibits a dielectric strength of at least 20 kV/mm to about 70 kV/mm2 when tested in accordance with ISO 60243-1.
Aspect 20. The polymer compositions of any one of aspects 1-13, wherein the polymer composition exhibits a dielectric strength of at least 30 kV/mm when tested in accordance with ISO 60243-1.
Aspect 21. The polymer compositions of any one of aspects 1-13, wherein the polymer composition exhibits a dielectric strength of at least 40 kV/mm when tested in accordance with ISO 60243-1.
Aspect 22. The polymer compositions of any one of aspects 1-16, wherein the polymer composition exhibits a tensile modulus of at least 3000 MPa when tested in accordance with ISO 527.
Aspect 23. The polymer compositions of any one of aspects 1-17, wherein the polymer composition exhibits an unnotched Izod impact strength of at least 70 kJ/m2 when tested in accordance with ISO 180.
Aspect 24. The polymer composition of any of aspects 1-18, wherein the polymer composition further comprises a flow modifier, reinforcing agent, antioxidant, heat stabilizer, light stabilizer, ultraviolet light stabilizer, ultraviolet absorbing additive, plasticizer, lubricant, release agent, antistatic agent, anti-fog agent, antimicrobial agent, chain extender, colorant, de-molding agent, flow promoter, surface effect additive, radiation stabilizer, flame retardant, anti-drip agent, or any combination thereof.
Aspect 25. An article comprising the polymer composition according to any of aspects 1 to 19, wherein the article comprises a component of electrical insulation, an electrical enclosure, a lamp housing, or a dielectric film for a capacitor.
Aspect 26. A method of forming a molded article comprising: combining, to form a mixture from about 5 wt. % to about 99 wt. % of a polymer base resin, from 0 wt. % to about 40 wt. % of a filler, and from about 0.01 wt. % to about 3 wt. % of a graphene; and extruding or injection molding the mixture to form the molded article, wherein the polymer composition exhibits a dielectric strength of at least 20 kV/mm, wherein the combined weight percent value of all components does not exceed about 100 wt. %, and all weight percent values are based on the total weight of the composition.
Aspect 27. The method according to aspect 26, wherein the molded article is an electrical insulating device.

### EXAMPLES

Detailed embodiments of the present disclosure are disclosed herein; it is to be understood that the disclosed embodiments are merely exemplary of the disclosure that may be embodied in various forms. Therefore, specific structural and functional details disclosed herein are not to be interpreted as limits, but merely as a basis for teaching one skilled in the art to employ the present disclosure. The specific examples below will enable the disclosure to be better understood. However, they are given merely by way of guidance and do not imply any limitation.

The following examples are provided to illustrate the compositions, processes, and properties of the present disclosure. The examples are merely illustrative and are not intended to limit the disclosure to the materials, conditions, or process parameters set forth therein.

### General Materials and Methods

The compositions as set forth in the Examples below were prepared from the components presented in Table 1 and Table 2. Formulations were prepared by extruding the pre-blended components using a twin extruder. The polymer base resin, graphene, and any additional filler or additives were first dry blended together, then fed into and extruded on a vacuum-vented 26 mm co-rotating W&F extruder. The melt is stranded though a two hole (3mm diameter per hole) die plate on a conveyor belt, cooled (through water sprays), dried (blow dryers) and finally cut into pellets using a pelletizer. Table3 shows the extrusion temperature profile. The extrudate was cooled using a water bath prior to pelletizing. The pellets were injection molded on an Engel 75 injection molding machine using different inserts to obtain tensile, impact bars, discs and plaques (78^{∗}78^{∗}1.5 mm) for dielectric strength testing, using the conditions presented in Table 4

Table 1 provides details regarding the different graphene materials according to their grade present in the analyzed compositions. FLG refers to few-layer graphene and GNP refers to graphene nanoplatelet according to ISO 80004-13. Table 2 provides the polymer resins used. Tables 3 and 4 provide the compounding and injection molding conditions, respectively.

**Table 1. Properties of Graphene.**

| **Supplier** | **Grade** | **Thickness (nm)** | **Diameter (microns)** | **Surface Area (mA/g)** | **Oxygen Content (%)** | **ISO 80004-13)** |
|---|---|---|---|---|---|---|
| XG sciences | Grade C300 | 3 | 1 to 2 | 250-350 | 7-8 | FLG, GNP |
| | Grade R25 | 20 | 25 | 30 to 60 | 3-4 | |
| Directa plus | Pure G+ | 2-4 | <10 | 300 | <0.6 | FLG, GNP |
| Angstron/ Grolman | N006-P Polar | 10-20 | 5 | >15 | 4 | |
| Graphene Production | Graphene Nanoplat elets (GNP) | 1-2 nm (2-5 layers) | 0.5-5 | ∼250 | <5 | FLG, GNP |

**Table 2. Materials - Resins used**

| **Component** | **Description** | **Supplier** |
|---|---|---|
| RADIPOL™ S24 | Polyamide 6 (PA6); intrinsic viscosity 2.4 deciliters per gram (dl/g) | Radici |
| LEXAN™ 172L | Polycarbonate (PC); melt flow rate MVR of 26 cm3/10 min. at 300 °C/1.2 kg | SABIC |

**Table 3. Compounding conditions**

| | | **PA6** | **PC** |
|---|---|---|---|
| Feed (Zone 0) Temp | °C | Not adjustable | Not adjustable |
| Feed (Zone 1) Temp | °C | 200 | 200 |
| Feed (Zone 2) Temp | °C | 220 | 220 |
| Feed (Zone 3) Temp | °C | 250 | 250 |
| Feed (Zone 4) Temp | °C | 260 | 270 |
| Feed (Zone 5) Temp | °C | 260 | 270 |
| Feed (Zone 6) Temp | °C | 260 | 270 |
| Feed (Zone 7) Temp | °C | 260 | 270 |
| Feed (Zone 8) Temp | °C | 260 | 270 |
| Feed (Zone 9) Temp | °C | 260 | 270 |
| Feed (Zone 10) Temp | °C | 260 | 270 |
| Die Temp | °C | 270 | 270 |
| Screw speed | NA | 300 | 300 |
| Throughput | Kg/hr | 25-30 | 25-30 |
| Torque | % | > 65 | > 65 |

**Table 4. injection molding conditions**

| | | **PA6** | | | | **PC** |
|---|---|---|---|---|---|---|
| | | Directa Plus C300 (≤ 3%) R25 | C300 (5-10%) | GP (0.5 - 1%) | GP (3-10%) | |
| Cnd: Pre-drying time | Hour | 4 | 4 | 4 | 4 | 2 |
| Cnd: Pre-drying temp | °C | 80 | 80 | 80 | 80 | 120 |
| Hopper temp | °C | 40 | 40 | 40 | 40 | 40 |
| Zone 1 | °C | 220 | 230 | 240 | 260 | 250 |
| Zone 2 | °C | 230 | 240 | 250 | 265 | 260 |
| Zone 3 | °C | 240 | 250 | 260 | 270 | 270 |
| Nozzle temp | °C | 235 | 245 | 255 | 265 | 265 |
| Mold temp | °C | 60-70 | 60 | 80 | 80 | 70 |

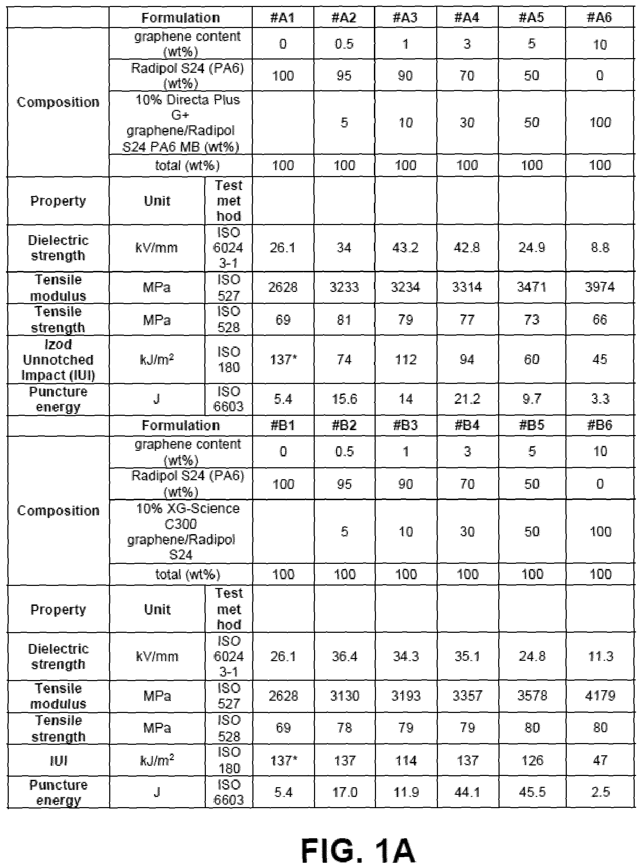

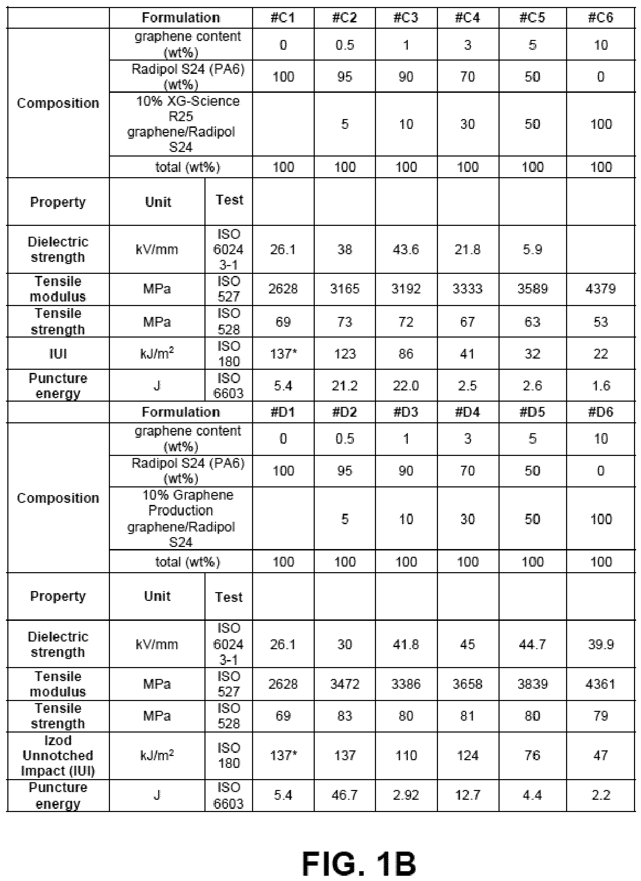

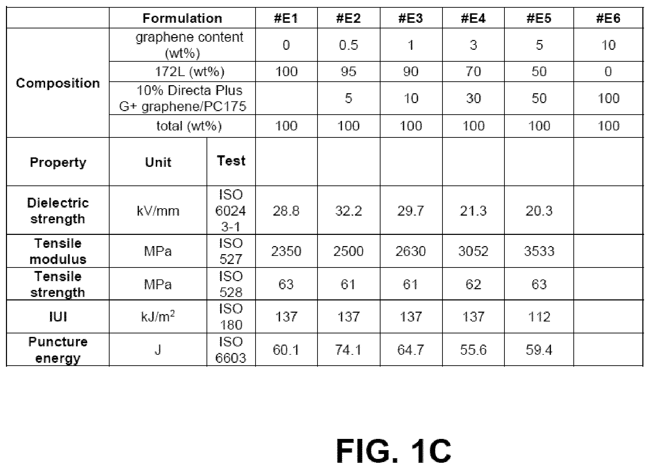

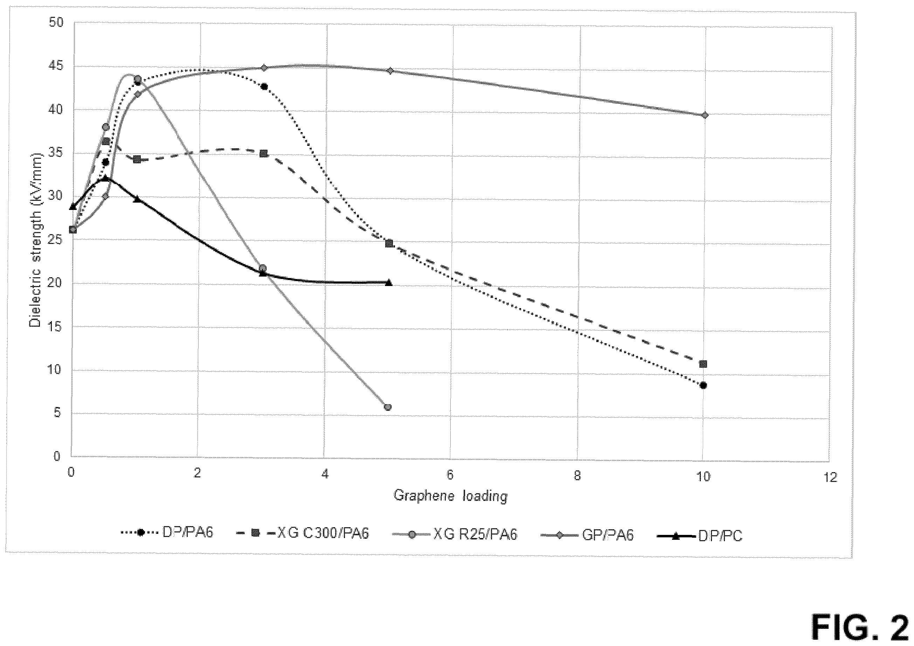

Table 5 presents the formulations and the performance of molded samples tested in accordance with the standards presented. Table 5 is presented in FIGS. 1A-1C. Note that in FIGS. 1A-1C entries indicated by* *denote that a value of 137 is the maximum that can be measured using the test set-up and reflects that the material is NOT BROKEN. FIG. 2 presents a graphical representation of this data.

The Graphene Production and the XG-Sciences C300 graphenes (D1-D6 and B1-B6, respectively) generally exhibited the highest dielectric strength (and relative improvement in PA6) over a quite broad range, with D1-D6 performing slightly better. A broad range values across which the dielectric strength performance is stable also indicates that it relatively easier to manufacture materials with a stable performance despite some fluctuations that often occur in production.

Particularly at low loadings of graphene (0.5 wt.% - 3 wt.%), the dielectric strength improved with an increase of about 70% when compared to the base polymer resin having 1 wt.% graphene loading. At higher loadings, dielectric strength appeared to decrease. At 5 wt% graphene the dielectric strength is comparable to that of the base polyamide 6. Further increasing the graphene loading deteriorates the dielectric strength to levels below that of the base polymer. Furthermore, mechanical and FR properties are improved, particularly with the 0.5 and 1 wt% addition of graphenes.

As provided herein, conventional conductive fillers tend to decrease the dielectric strength and when using micron sized insulative fillers, high loadings above 10 wt% are typically required to improve the breakdown strength [2-5], but at the expense of mechanical properties, particularly ductility. The data presented here clearly show that, as unexpected as it is, a low loading of conductive nanofiller like graphene is capable of significantly improving the dielectric strength while maintaining mechanical properties.

When cost is considered, the "thicker" graphenes which are typically stacks of more than 10 graphene layers (thickness greater than 5 nm) may be more desirable, and the XG-Sciences R25 may be preferred as the samples have a high dielectric strength at 1 wt. % graphene.

The patentable scope of the disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A polymer composition comprising:
from about 5 wt. % to about 99 wt. % of a polymer base resin;
from about 0 wt. % to about 40 wt. % of a filler; and
from about 0.01 wt. % to about 10 wt. % of a graphene;
wherein the polymer composition exhibits a dielectric constant that is at least 1.1 times greater than a substantially similar composition in the absence of the graphene,
wherein the combined weight percent value of all components does not exceed about 100 wt. %, and all weight percent values are based on the total weight of the composition.

2. The polymer composition of claim 1, wherein the graphene is present in an amount from 0.01 wt. % to about 3 wt. %

3. The polymer composition of claim 1, wherein the filler is present in an amount of from 0.01 wt. % to 40 wt. %.

4. The polymer composition of claim 1, wherein the graphene comprises graphene nanoplatelets.

5. The polymer composition of claim 1, wherein the graphene has at least one dimension less than 100 nm.

6. The polymer composition of claim 1, wherein the graphene has an average diameter of less than 30 microns.

7. The polymer composition of claim 1, wherein the graphene comprises more than 10 layers.

8. The polymer composition of claim 1, wherein the graphene has a surface area of greater than 100 m²/g.

9. The polymer composition of claim 1, wherein the graphene has a surface area of from 100 m²/g to 500 m²/g.

10. The polymer composition of claim 1, wherein the graphene has an oxygen content of less than or equal to 10 % based on the total mass of the graphene.

11. The polymer composition of claim 1, wherein the graphene has an oxygen content of less than or equal to 8 % based on the total mass of the graphene.

12. The polymer composition of claim 1, wherein the polymer base resin comprises a polyamide.

13. The polymer composition of claim 1, wherein the polymer base resin comprises polyamide 6.

14. The polymer compositions of any one of claims 1-13, wherein the polymer composition exhibits a dielectric strength of at least 20 kV/mm when tested in accordance with ISO 60243-1.

15. An article comprising the polymer composition according to any of claims 1 to 19, wherein the article comprises a component of electrical insulation, an electrical enclosure, a lamp housing, or a dielectric film for a capacitor.
